# FASCICULE DE BREVET EUROPEEN

(11) **EP 0 746 818 B1**
(45) Date de publication et mention de la délivrance du brevet: **15.10.1997**
(21) Numéro de dépôt: 95906381.9
(22) Date de dépôt: 09.01.1995
(51) Int. Cl.: G06F 11/14

(54) **PROCEDE DE SAUVEGARDE ET/OU D'ARCHIVAGE DE DONNEES ET/OU DE FICHIERS INFORMATIQUES ET DISPOSITIF POUR LA MISE EN UVRE DUDIT PROCEDE**
VERFAHREN UND VORRICHTUNG ZUR SICHERSTELLUNG VON DATEN UND/ODER ZUR ARCHIVIERUNGVON DATEN UND/ODER RECHNERDATEIEN
METHOD AND DEVICE FOR BACKING UP AND/OR ARCHIVING DATA AND/OR COMPUTER FILES

(30) Priorité: 07.01.1994 FR 9400231
(43) Date de publication de la demande: 11.12.1996
(73) Titulaire: Rietsch, Jean-Marc, 90000 Belfort (FR)
(72) Inventeur: Rietsch, Jean-Marc, 90000 Belfort (FR)
(74) Mandataire: Cabinet Martinet & Lapoux
(86) Numéro de dépôt international: FR9500026
(87) Numéro de publication internationale: WO9519002

(56) Documents cités:
- US-A- 5 133 065
- US-A- 5 276 860

## Description

La présente invention concerne le domaine des systèmes d'informations et de gestion de données informatiques, en particulier des entreprises et notamment la préservation desdites informations ou données dans le temps, et a pour objet un procédé de sauvegarde de données et/ou de fichiers informatiques, ainsi qu'un dispositif pour la mise en oeuvre de ce procédé.

Actuellement, il devient de plus en plus vital pour une entreprise de s'assurer de la conservation intégrale des données informatiques essentielles à son bon fonctionnement, ce même d'un jour ouvrable au suivant.

Des procédés de sauvegarde répondant à ces besoins mais nécessitant la présence d'une personne pour leur lancement sont connus de US-A-5 133 065 et US-A-5 276 860.

Toutefois, les entreprises de moyenne ou de petite taille ne disposent souvent pas, contrairement aux structures importantes, des moyens, en personnel et en matériel, suffisants pour réaliser une sauvegarde régulière et fiable, rendant cette dernière aléatoire voire inexistante.

Les principales raisons de ces lacunes, voire ce manque, de préservation et de conservation des données résident dans les lourdeurs, les contraintes et les frais qui en résultent, à savoir, durée des sauvegardes et présence d'au moins une personne, immobilisation d'un ordinateur au moins ou d'un réseau dans son entier, nécessité de planifier les sauvegardes et de gérer les supports correspondants, besoins importants de supports de stockage et nécessité d'une unité de lecture/enregistrement supplémentaire.

En outre, la fiabilité de telles sauvegardes n'est pas très élevée du fait des supports utilisés (bandes) et des manques de rigueur dans la gestion desdits supports et dépend, en outre, fortement de l'opérateur qui l'exécute (problème de congés).

La présente invention a pour but de pallier l'ensemble des inconvénients précités.

A cet effet, elle a pour objet un procédé de sauvegarde et/ou d'archivage de données informatiques et/ou de fichiers d'un ordinateur ou d'un réseau d'ordinateurs, caractérisé en ce qu'il est automatique et en ce qu'il consiste à mettre en marche, le cas échéant, à un instant prédéterminé, l'unique ordinateur concerné ou un ordinateur déterminé, destiné à la sauvegarde, d'un réseau d'ordinateurs appartenant à un utilisateur, au moyen d'un circuit d'horloge initialisée d'un module de sauvegarde local, à déterminer et à compacter, le cas échéant, les données informatiques et/ou fichiers modifiés ou manipulés par les utilisateurs depuis la dernière sauvegarde, après avoir comparé lesdites données et/ou lesdits fichiers à une liste de référence de données et/ou de fichiers à sauvegarder ou à ne pas sauvegarder, puis à transférer vers le module de sauvegarde local les données et/ou les fichiers sélectionnés ou concernés par la sauvegarde, à stocker ces derniers(ères) au niveau dudit module de sauvegarde, à établir un dialogue, le cas échéant à plusieurs reprises, entre ce dernier et au moins une unité de stockage centrale, par l'intermédiaire d'un réseau de télécommunication public ou privé, et à définir les modalités du transfert, à transférer ensuite lesdites données et/ou fichiers dudit module vers ladite unité, et, enfin, après achèvement de l'opération précédente, à mettre hors tension, le cas échéant, l'ordinateur considéré.

L'invention a également pour objet un dispositif pour la mise en oeuvre du procédé de sauvegarde et/ou d'archivage précité, caractérisé en ce qu'il est principalement constitué, d'une part, par un module de sauvegarde local comprenant une unité de traitement muni d'un circuit d'horloge, d'une unité de stockage locale et d'une unité d'interface, d'autre part, par un moyen commutateur, commandé par ladite unité de traitement et disposé en parallèle avec l'interrupteur d'alimentation de l'unique ordinateur concerné ou de l'ordinateur déterminé, destiné à la sauvegarde, d'un réseau d'ordinateurs et par une unité de connexion en réseau du module avec l'ordinateur, et, enfin, par au moins une unité de stockage centrale, pouvant être reliée à plusieurs modules de sauvegarde locaux par l'intermédiaire d'un réseau de télécommunication public.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:
la figure 1 est une vue schématique du branchement d'un module de sauvegarde local faisant partie du dispositif conforme à l'invention, selon un mode de réalisation de l'invention;
la figure 2 est une vue plus détaillée du module de sauvegarde local représenté à la figure 1, et,
la figure 3 est une vue schématique d'une unité de stockage centrale selon l'invention.

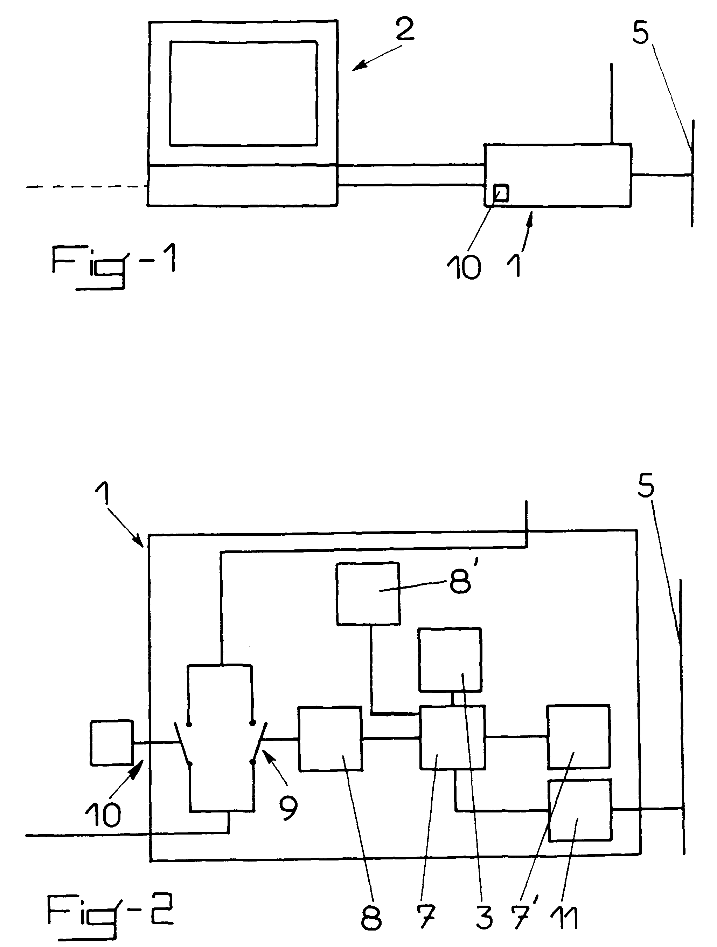

Conformément à l'invention, et comme le montrent les figures 1 à 3 des dessins annexés, le procédé de sauvegarde et/ou d'archivage de données informatiques et/ou de fichiers d'un ordinateur ou d'un réseau d'ordinateurs, caractérisé en ce qu'il est automatique et en ce qu'il consiste à mettre en marche, le cas échéant, à un instant prédéterminé, l'unique ordinateur 2 concerné ou un ordinateur 2 déterminé, destiné à la sauvegarde, d'un réseau d'ordinateurs appartenant à un utilisateur, au moyen d'un circuit d'horloge 3 initialisée d'un module 1 de sauvegarde local, à déterminer et à compacter, le cas échéant, les données informatiques et/ou fichiers modifiés ou manipulés par les utilisateurs depuis la dernière sauvegarde, après avoir comparé lesdites données et/ou lesdits fichiers à une liste de référence de données et/ou de fichiers à sauvegarder ou à ne pas sauvegarder, puis à transférer vers le module 1 de sauvegarde local les données et/ou les fichiers sélectionnés ou concernés par la sauvegarde, à stocker ces derniers(ères) au niveau dudit module de sauvegarde 1, à établir un dialogue, le cas échéant à plusieurs reprises, entre ce dernier et au moins une unité de stockage centrale 6, par l'intermédiaire d'un réseau de télécommunication public ou privé 5, et à définir les modalités du transfert, à transférer ensuite lesdites données et/ou fichiers dudit module 1 vers ladite unité 6, et, enfin, après achèvement de l'opération précédente, à mettre hors tension, le cas échéant, l'ordinateur 2 considéré.

La mise en marche de l'ordinateur 2 ne s'effectuera que si ce dernier n'est pas déjà sous tension, et sa mise hors tension ne sera effectivement réalisée, qu'à condition qu'aucun utilisateur ne soit entrain de travailler sur ledit ordinateur 2.

Selon une première caractéristique de l'invention, l'établissement et le déroulement du dialogue entre un module 1 de sauvegarde local et une unité de stockage centrale 6, consiste, pour cette dernière, à appeler successivement l'ensemble des modules 1 reliés à ladite unité 6, à vérifier, au niveau de chaque module 1, si les données et/ou fichiers sont prêts pour le transfert et, le cas échéant, à prendre en compte leur quantité ou volume, puis, en fonction des résultats de l'opération précédente, à définir les modalités du transfert ou à établir un nouveau dialogue ultérieurement.

De même, la définition des modalités du transfert consiste essentiellement à communiquer au module de sauvegarde local 1 considéré un numéro d'appel pour le transfert immédiat ou différé à un instant fixé par l'unité de stockage centrale 6, des données et/ou fichiers considérés, ce en fonction du volume ou de la quantité de ces derniers(ères).

Afin d'interférer le moins possible avec les périodes d'utilisation normales de l'ordinateur 2 et, le cas échéant, minimiser les frais de transmission sur le réseau de télécommunication, le procédé de sauvegarde automatique précité, consiste, d'une part, à transférer, en vue d'une sauvegarde, uniquement les données ou fichiers manipulés depuis la sauvegarde précédente, ce préférentiellement durant les périodes nocturnes suivant les jours ouvrables et après une première sauvegarde de l'ensemble des données et/ou fichiers de l'utilisateur concerné et, d'autre part, à transférer, en vue d'un archivage, l'ensemble des données ou fichiers sélectionnés par l'utilisateur, ce avantageusement durant les jours non ouvrables et en réalisant un stockage sur un support physique donné propre à l'utilisateur considéré.

De manière avantageuse chaque ensemble de données ou fichier est stocké en triple exemplaire, correspondants aux trois dernières versions sauvegardées, une nouvelle sauvegarde dudit ensemble ou dudit fichier entraînant un effacement de la copie la plus ancienne des trois copies stockées.

La sauvegarde des données et/ou fichiers informatiques peut, comme indiqué précédemment, aboutir à un transfert desdites données et/ou desdits fichiers vers une unité de stockage centrale 6, reliée à une pluralité de modules de sauvegarde locaux 1 et, le cas échéant, interconnectée elle-même avec une pluralité d'autres unités de stockage centrales 6, géographiquement distants desdits modules 1.

Pour ce dernier cas, le transfert des données et/ou fichiers vers la ou les unités de stockage centrales 6 consiste à établir une liaison entre le module de sauvegarde local 1 considéré et ladite ou lesdites unité(s) 6, après définition préalable des modalités du transfert, puis à transmettre lesdits fichiers et/ou données dudit module de sauvegarde local 1 vers ladite ou lesdites unité(s) de stockage centrale(s) 6, et, enfin, à envoyer , en fin de transmission, un message ou signal d'acquittement de cette ou ces dernière(s) vers ledit module de sauvegarde local 1 et à transmettre ledit message ou signal précité à l'ordinateur 2 concerné.

Selon une autre variante de réalisation de l'invention, et en vue de garantir une sécurisation maximale de la sauvegarde, ledit procédé automatique de sauvegarde peut, en outre, consister, avant établissement de la liaison entre le module de sauvegarde local 1 et l'unité de stockage centrale 6 considérée, à crypter ou à coder les données et/ou les contenus des fichiers à sauvegarder au niveau dudit module 1, à vérifier, après achèvement de la transmission vers l'unité de stockage centrale 6, l'intégrité des données et/ou des contenus des fichiers transmis et à émettre, le cas échéant, un certificat d'intégrité, transmis en retour par l'unité de stockage centrale 6 vers l'ordinateur 2 concerné, par l'intermédiaire du module de sauvegarde local 1.

En vue de permettre à l'utilisateur, dès le matin, de vérifier aisément l'état de la sauvegarde effectuée durant la nuit ou le jour non ouvrable précédent, il peut être prévu qu'à la première mise en marche de l'ordinateur concerné 2 par l'utilisateur, suite à une opération de sauvegarde, ce dernier affiche automatiquement les éventuels dysfonctionnements ou anomalies survenus lors de la sauvegarde précitée.

Conformément à une caractéristique de l'invention, le procédé de sauvegarde peut également consister, en vue de récupérer les données et/ou fichiers sauvegardé(e)s précédemment, à déposer une requête correspondante dans un fichier spécifique, dont le contenu est contrôlé en permanence par le module de sauvegarde local 1, à transmettre ladite requête à l'unité de stockage centrale 6 concernée et à établir une liaison avec ladite unité 6, au moyen dudit module de sauvegarde local 1, à identifier ce dernier et à préparer les données et/ou fichiers sauvegardé(e)s à retransmettre, au niveau de ladite unité de stockage centrale 6, et, enfin, à lancer une procédure automatique de transfert en retour des données et/ou fichiers précité(e)s de l'unité de stockage centrale 6 vers ledit module de sauvegarde local 1 ayant émis la requête, les données et/ou fichiers pouvant alors être recopié(e)s à volonté par l'utilisateur.

Selon un mode de réalisation préféré de l'invention, la transmission est assurée par l'intermédiaire d'un réseau 5 commuté haut débit numérique spécialisé ou non, notamment ceux correspondants à la norme européenne EURO ISDN.

Par ailleurs, en vue d'assurer une protection contre des instructions ou des données parasites, il peut être prévu, de manière préférentielle, que ledit procédé de sauvegarde consiste, immédiatement après mise en marche de l'ordinateur 2 et avant toute manipulation de données et/ou de fichiers, à mettre en oeuvre automatiquement une procédure de détection de virus et, en cas de détection effective, à interrompre ledit procédé de sauvegarde.

L'invention a également pour objet un dispositif pour la mise en oeuvre du procédé de sauvegarde et/ou d'archivage automatique décrit ci-dessus, principalement constitué, d'une part, par un module de sauvegarde local 1 comprenant une unité de traitement 7 muni d'un circuit d'horloge 3, d'une unité de stockage locale 7' et d'une unité d'interface 8, d'autre part, par un moyen commutateur 9, commandé par ladite unité de traitement 7 et disposé en parallèle avec l'interrupteur d'alimentation 10 de l'unique ordinateur 2 concerné ou de l'ordinateur 2 déterminé, destiné à la sauvegarde, d'un réseau d'ordinateurs et par une unité 8' de connexion en réseau du module 1 avec l'ordinateur 2, et, enfin, par au moins une unité de stockage centrale 6, pouvant être reliée à plusieurs modules de sauvegarde locaux 1 par l'intermédiaire d'un réseau de télécommunication public ou privé 5.

De manière préférentielle, le module de sauvegarde local 1 consiste en plusieurs cartes électroniques reliées à une alimentation stabilisée, le cas échéant sécurisée, et intégrant chacune une ou plusieurs des unités 7 à 9 précitées et est disposé dans un boîtier distinct ou incorporé dans le boîtier de l'unique ordinateur 2 concerné ou de l'ordinateur 2 prédestiné à la sauvegarde, un dispositif de clé électronique d'identification et d'autorisation d'utilisation, extérieur au boîtier, pouvant être adjoint audit module 1.

Lorsqu'un ordinateur ou micro-ordinateur 2, faisant partie d'un réseau ou d'un autre système informatique multipostes, constitue un frontal destiné à la sauvegarde, la capacité de stockage de ce dernier devra être augmentée en conséquence et l'ensemble des fichiers et/ou données à sauvegarder devra être rapatrié vers ledit frontal selon une procédure adéquate.

Toutefois, dans le cas d'un réseau d'ordinateurs ou de micro-ordinateurs (ces termes étant utilisés de manière équivalente dans la présente description), le module de sauvegarde local 1 pourra également être connecté directement sur le réseau au moyen d'une unité ou carte de connexion en réseau correspondante 8', les données et/ou fichiers à sauvegarder étant prélevé(e)s directement au niveau du serveur, en fonctionnement permanent, et éventuellement d'une ou de plusieurs stations.

La mise en place d'un moyen commutateur 9, tel qu'un relais par exemple, en parallèle avec l'interrupteur 10 de l'ordinateur 2 autorisera la mise en marche automatique dudit ordinateur 2 quel que soit l'état dudit interrupteur 10, ce dernier pouvant être disposé sur le boîtier dudit ordinateur 2 ou sur le boîtier renfermant ledit module de sauvegarde local 1.

L'unité de traitement 7 pourra consister, par exemple, en une carte mère du type 80386 DX33, 80486 SX25 ou encore 80486 DX66 et l'unité de stockage locale 7' se présenter sous la forme d'une unité de lecture/enregistrement sur disque dur magnétique, pilotée par une carte contrôleur de disque, la capacité dudit disque dur étant adaptée au volume de données à transmettre et/ou à manipuler.

L'unité d'interface 8 commande le moyen commutateur 9 au moyen d'une sortie parallèle, une sortie série présente pouvant être utilisée pour des opérations de maintenance ou de programmation dudit module 1.

Selon une autre caractéristique de l'invention, ledit module de sauvegarde local 1 comprend, en outre, une unité ou carte de communication 11 pour le branchement et l'interface avec le réseau commuté de télécommunication 5 ainsi que, le cas échéant, une unité de lecture de cartes à puces pour l'identification de l'utilisateur et le cryptage des données et/ou fichiers avant transmission (non représenté).

Le lecteur de carte à puces permet, par exemple, l'introduction d'une clé électronique propre à l'utilisateur/client considéré générant un codage ou cryptage spécifique des données et/ou fichiers et également la certification de leur intégrité après sauvegarde.

Le module 1 pourra, enfin, être également pourvu d'un écran de visualisation pour le suivi du déroulement de la sauvegarde.

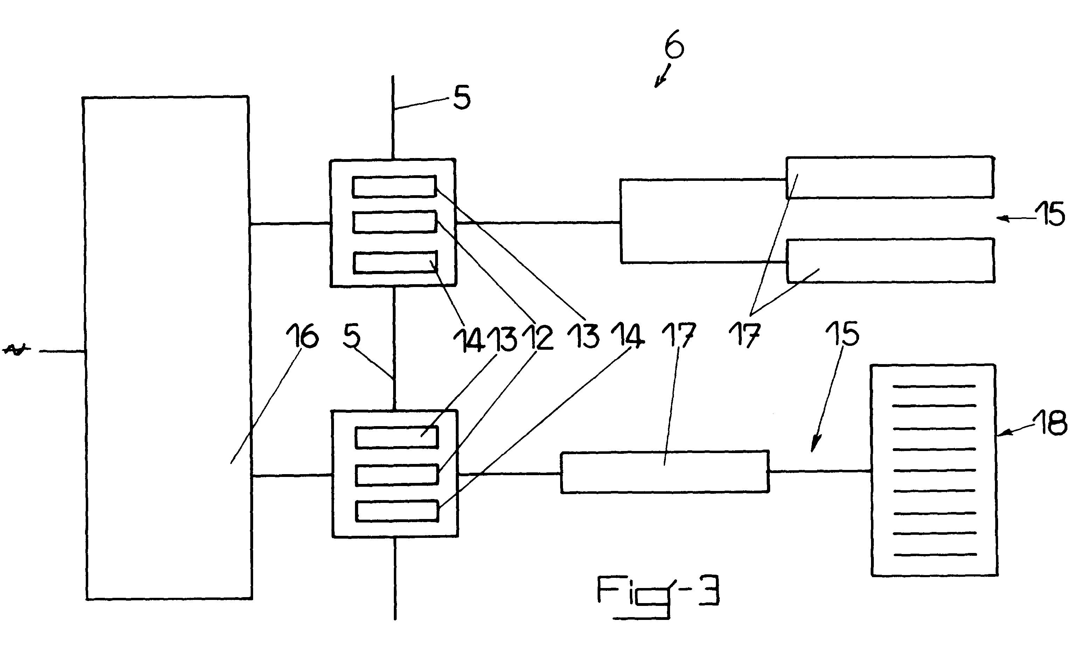

Conformément à une autre caractéristique de l'invention, représentée à la figure 3 des dessins annexés, l'unité de stockage centrale 6, au moins présente et installée à un endroit géographiquement distant du module de sauvegarde local 1, est essentiellement composée, d'une part, d'au moins une unité de traitement 12 pourvue d'au moins une unité d'interface de communication 13 avec le réseau commuté de télécommunication 5 et d'au moins une unité de stockage rapide 14 et, d'autre part, d'au moins une unité 15 de stockage sur supports à très grande capacité, l'ensemble desdites unités 12 à 15 étant connecté à une alimentation électrique sécurisée 16.

L'unité de traitement 12 pourra consister en un dispositif informatique fonctionnant sous système connu sous la désignation UNIX et l'unité d'interface de communication 13 en une carte du type connu sous la désignation "S": (carte pour accès de base ou groupement d'accès de base NUMERIS) ou "T2": (carte d'accès T2 NUMERIS) par l'homme du métier ou toute autre interface de communication en fonction du réseau de communication.

L'unité de stockage rapide 14 pourra se présenter sous la forme d'une unité de lecture/enregistrement de disques durs, et servir de mémoire tampon lorsque l'écriture sur les supports à très grande capacité n'est pas suffisamment rapide pour le flux incident de données transmises.

Selon un mode de réalisation préférentiel de l'invention, les supports à très grande capacité consistent en des disques magnéto-optiques et l'unité de stockage 15 consiste soit en deux modules 17 de lecture/enregistrement de disques magnéto-optiques ou optiques, à usage unique et ne pouvant être effacés, soit en un module 17 de lecture/enregistrement du type précité, associé à un magasin support 18 de disques magnéto-optiques ou optiques, à usage unique et ne pouvant être effacés.

Afin de garantir une sécurité maximale, l'ensemble des données et/ou fichiers transmis à l'unité de sauvegarde centrale sont copiées, en vue d'obtenir deux exemplaires ou jeux distincts stockés à des emplacement différents.

Les disques magnéto-optiques, réutilisables, serviront avantageusement pour les sauvegardes, alors que les disques optiques, non réutilisables, seront destinés uniquement à l'archivage.

Par ailleurs, en vue de prévenir toute défaillance matérielle au niveau de l'unité ou des unités de stockage centrales 6 et de pouvoir réaliser une sauvegarde quelles que soient les circonstances, l'ensemble des unités 12 à 15 et le module 17 constituant lesdites unités de stockage centrales 6 sont doublés, des unités ou cartes de connexion en réseau pouvant éventuellement permettre l'association de plusieurs unités de stockage centrales 6 en un réseau.

Les différentes unités de traitement 7 et 12 seront, bien entendu, muni des différents logiciels fonctionnels existants, connus de l'homme du métier, pour assurer, ensemble avec les logiciels spécifiques de commande et de contrôle de la sauvegarde dont les fonctionnalités sont exposées ci-dessus, les différentes tâches et fonctions nécessaires aux différentes opérations envisagées.

Grâce à l'invention, il est donc notamment possible de réaliser un procédé et un dispositif de sauvegarde de données et/ou fichiers informatiques entièrement automatique et particulièrement sûre, du fait, entre autre, de l'identification systématique des appels, de la validation des informations transmises, du stockage simultané sur des supports différents, de la fiabilité des transferts et des possibilités de certification de l'intégrité des données.

L'utilisateur pourra, bien évidement, également lancer une sauvegarde manuelle, de sa propre initiative et en dehors des périodes de sauvegarde normales, à un moment quelconque de la journée, l'opération de ladite sauvegarde n'interférant pas avec l'utilisation normale des ordinateurs du réseau concernés.

Bien entendu, l'invention n'est pas limitée aux modes de réalisation décrits et représentés aux dessins annexés. Des modifications restent possibles sans sortir pour autant du domaine de l'invention tel qu'il est défini par les revendications.

## Revendications

1. Procédé de sauvegarde et/ou d'archivage de données informatiques et/ou de fichiers d'un ordinateur ou d'un réseau d'ordinateurs, caractérisé en ce qu'il est automatique et en ce qu'il consiste à mettre en marche,le cas échéant, à un instant prédéterminé, l'unique ordinateur (2) concerné ou un ordinateur (2) déterminé, destiné à la sauvegarde, d'un réseau d'ordinateurs appartenant à un utilisateur, au moyen d'un circuit d'horloge (3) initialisée d'un module (1) de sauvegarde local, à déterminer et à compacter, le cas échéant, les données informatiques et/ou fichiers modifiés ou manipulés par les utilisateurs depuis la dernière sauvegarde, après avoir comparé lesdites données et/ou lesdits fichiers à une liste de référence de données et/ou de fichiers à sauvegarder ou à ne pas sauvegarder, puis à transférer vers le module (1) de sauvegarde local les données et/ou les fichiers sélectionnés ou concernés par la sauvegarde, à stocker ces derniers(ères) au niveau dudit module de sauvegarde (1), à établir un dialogue, le cas échéant à plusieurs reprises, entre ce dernier et au moins une unité de stockage centrale (6), par l'intermédiaire d'un réseau de télécommunication public ou privé (5), et à définir les modalités du transfert, à transférer ensuite lesdites données et/ou fichiers dudit module (1) vers ladite unité (6), et, enfin, après achèvement de l'opération précédente, à mettre hors tension, le cas échéant, l'ordinateur (2) considéré.

2. Procédé selon la revendication 1, caractérisé en ce que l'établissement et le déroulement du dialogue entre un module (1) de sauvegarde local et une unité de stockage centrale (6), consiste, pour cette dernière, à appeler successivement l'ensemble des modules (1) reliés à ladite unité (6), à vérifier, au niveau de chaque module (1), si les données et/ou fichiers sont prêts pour le transfert et à prendre en compte leur quantité ou volume, puis, en fonction des résultats de l'opération précédente, à définir les modalités du transfert ou à établir un nouveau dialogue ultérieurement.

3. Procédé selon l'une quelconque des revendications 1 et 2, caractérisé en ce que la définition des modalités du transfert consiste essentiellement à communiquer au module de sauvegarde local (1) considéré un numéro d'appel pour le transfert immédiat ou différé à un instant fixé par l'unité de stockage centrale (6), des données et/ou fichiers considérés, ce en fonction du volume ou de la quantité de ces derniers(ères).

4. Procédé selon l'une quelconque des revendications 1 à 3, caractérisé en ce qu'il consiste, d'une part, à transférer, en vue d'une sauvegarde, uniquement les données ou fichiers manipulés depuis la sauvegarde précédente, ce préférentiellement durant les périodes nocturnes suivant les jours ouvrables et après une première sauvegarde de l'ensemble des données et/ou fichiers de l'utilisateur concerné et, d'autre part, à transférer, en vue d'un archivage, l'ensemble des données ou fichiers sélectionnés par l'utilisateur, ce avantageusement durant les jours non ouvrables et en réalisant un stockage sur un support physique donné propre à l'utilisateur considéré.

5. Procédé selon l'une quelconque des revendications 1 à 4, caractérisé en ce que le transfert des données et/ou fichiers vers la ou les unités de stockage centrales (6) consiste à établir une liaison entre le module de sauvegarde local (1) considéré et ladite ou lesdites unité(s) (6), après définition préalable des modalités du transfert, puis à transmettre lesdits fichiers et/ou données dudit module de sauvegarde local (1) vers ladite ou lesdites unité(s) de stockage centrale(s) (6), et, enfin, à envoyer, en fin de transmission, un message ou signal d'acquittement de cette ou ces dernière(s) vers ledit module de sauvegarde local (1) et à transmettre ledit message ou signal précité à l'ordinateur (2) concerné.

6. Procédé selon la revendication 5, caractérisé en ce qu'il consiste, avant établissement de la liaison entre le module de sauvegarde local (1) et l'unité de stockage centrale (6) considérée, à crypter ou à coder les données et/ou les contenus des fichiers à sauvegarder au niveau dudit module (1), à vérifier, après achèvement de la transmission vers l'unité de stockage centrale (6), l'intégrité des données et/ou des contenus des fichiers transmis et à émettre, le cas échéant, un certificat d'intégrité, transmis en retour par l'unité de stockage centrale (6) vers l'ordinateur (2) concerné, par l'intermédiaire du module de sauvegarde local (1).

7. Procédé selon l'une quelconque des revendications 1 à 6, caractérisé en ce qu'à la première mise en marche de l'ordinateur concerné (2) par l'utilisateur, suite à une opération de sauvegarde, ce dernier affiche automatiquement les éventuels dysfonctionnements ou anomalies survenus lors de la sauvegarde précitée.

8. Procédé selon l'une quelconque des revendications 1 à 7, caractérisé en ce qu'il consiste, en vue de récupérer les données et/ou fichiers sauvegardé(e)s précédemment, à déposer une requête correspondante dans un fichier spécifique, dont le contenu est contrôlé en permanence par le module de sauvegarde local (1), à transmettre ladite requête à l'unité de stockage centrale (6) concernée et à établir une liaison avec ladite unité (6), au moyen dudit module de sauvegarde local (1), à identifier ce dernier et à préparer les données et/ou fichiers sauvegardé(e)s à retransmettre, au niveau de ladite unité de stockage centrale (6), et, enfin, à lancer une procédure automatique de transfert en retour des données et/ou fichiers précité(e)s de l'unité de stockage centrale (6) vers ledit module de sauvegarde local (1) ayant émis la requête, les données et/ou fichiers pouvant alors être recopié(e)s à volonté par l'utilisateur.

9. Procédé selon l'une quelconque des revendications 1 à 8, caractérisé en ce que la transmission est assurée par l'intermédiaire d'un réseau (5) commuté haut débit numérique spécialisé ou non, notamment ceux correspondants à la norme européenne EURO ISDN.

10. Procédé selon l'une quelconque des revendications 1 à 9, caractérisé en ce qu'il consiste, immédiatement après mise en marche de l'ordinateur (2) et avant toute manipulation de données et/ou de fichiers, à mettre en oeuvre automatiquement une procédure de détection de virus et, en cas de détection effective, à interrompre ledit procédé de sauvegarde.

11. Dispositif pour la mise en oeuvre du procédé de sauvegarde et/ou d'archivage selon l'une quelconque des revendications 1 à 10, caractérisé en ce qu'il est principalement constitué, d'une part, par un module de sauvegarde local (1) comprenant une unité de traitement (7) muni d'un circuit d'horloge (3), d'une unité de stockage locale (7') et d'une unité d'interface (8), d'autre part, par un moyen commutateur (9), commandé par ladite unité de traitement (7) et disposé en parallèle avec l'interrupteur d'alimentation (10) de l'unique ordinateur (2) concerné ou de l'ordinateur (2) déterminé, destiné à la sauvegarde, d'un réseau d'ordinateurs et par une unité (8') de connexion en réseau du module (1) avec l'ordinateur (2), et, enfin, par au moins une unité de stockage centrale (6), pouvant être reliée à plusieurs modules de sauvegarde locaux (1) par l'intermédiaire d'un réseau de télécommunication public (5).

12. Dispositif selon la revendication 11, caractérisé en ce que le module de sauvegarde local (1) consiste en plusieurs cartes électroniques reliées à une alimentation stabilisée et intégrant chacune une ou plusieurs des unités (7 à 9) précitées et est disposé dans un boîtier distinct ou incorporé dans le boîtier de l'unique ordinateur (2) concerné ou de l'ordinateur (2) prédestiné à la sauvegarde, un dispositif de clé électronique d'identification et d'autorisation d'utilisation, extérieur au boîtier pouvant être adjoint audit module (1).

13. Dispositif selon l'une quelconque des revendications 11 et 12, caractérisé en ce que le module de sauvegarde local (1) comprend, en outre, une unité ou carte de communication (11) pour le branchement et l'interface avec le réseau commuté de télécommunication (5) ainsi que, le cas échéant, une unité de lecture de cartes à puces pour l'identification de l'utilisateur et le cryptage des données et/ou fichiers avant transmission.

14. Dispositif selon l'une quelconque des revendications 11 à 13, caractérisé en ce que l'unité de stockage centrale (6) au moins présente, installée à un endroit géographiquement distant du module de sauvegarde local (1), est essentiellement composée, d'une part, d'au moins une unité de traitement (12) pourvue d'au moins une unité d'interface de communication (13) avec le réseau commuté de télécommunication (5) et d'au moins une unité de stockage rapide (14) et, d'autre part, d'au moins une unité (15) de stockage sur supports à très grande capacité, l'ensemble desdites unités (12 à 15) étant connecté à une alimentation électrique sécurisée (16).

15. Dispositif selon la revendication 14, caractérisé en ce que les supports à très grande capacité consistent en des disques magnéto-optiques et en ce que l'unité de stockage (15) consiste soit en deux modules (17) de lecture/enregistrement de disques magnéto-optiques ou optiques, à usage unique et ne pouvant être effacés, soit en un module (17) de lecture/enregistrement du type précité, associé à un magasin support (18) de disques magnéto-optiques ou optiques, à usage unique et ne pouvant être effacés.

16. Dispositif selon l'une quelconque des revendications 14 et 15, caractérisé en ce que l'ensemble des unités (12 à 15) et le module (17) sont doublés, des unités ou cartes de connexion en réseau pouvant éventuellement permettre l'association de plusieurs unités de stockage centrales (6) en un réseau.

## Patentansprüche

1. Verfahren zum Sichern und/oder Archivieren von Informatikdaten und/oder -dateien eines Computers oder Computernetzes, dadurch gekennzeichnet, daß es automatisch ist und darin besteht, den betreffenden Computer (2) oder einen für die Datensicherung vorgesehenen vorgegebenen Computer (2) eines einem Benutzer gehörenden Computernetzes gegebenenfalls zu einem vorgegebenen Zeitpunkt mit Hilfe einer initialisierten Zeitschaltung (3) eines lokalen Sicherungsmoduls (1) in Gang zu setzen, die von den Benutzern seit der letzten Sicherung geänderten oder manipulierten Informatikdaten und/oder -dateien zu bestimmen und gegebenenfalls zu komprimieren, nachdem diese Daten und/oder Dateien mit einer Referenzliste von zu sichernden oder nicht zu sichernden Daten und/oder Dateien verglichen worden sind, dann die ausgewählten oder von der Sicherung betroffen Daten und/oder Dateien zum lokalen Sicherungsmodul (1) zu übertragen, letztere am Sicherungsmodul (1) zu speichern, einen Dialog, gegebenenfalls mit mehreren Wiederholungen, zwischen letzterem und wenigstens einer zentralen Speichereinheit (6) über ein öffentliches oder privates Fernmeldenetz (5) aufzubauen und die Modalitäten der Übertragung festzulegen, anschließend die Daten und/oder Dateien von dem Modul (1) zur Einheit (6) zu übertragen und schließlich nach Abschluß der vorhergehenden Operation gegebenenfalls den betreffenden Computer (2) auszuschalten.

2. Verfahren nach Anspruch 1, dadurch gekennzeichnet, daß Aufbau und Abwicklung des Dialogs zwischen einem lokalen Sicherungsmodul (1) und einer zentralen Speichereinheit (6) für letztere darin besteht, nacheinander sämtliche mit der Einheit (6) verbundenen Module (1) anzurufen, an jedem Modul (1) zu überprüfen, ob die Daten und/oder Dateien zur Übertragung bereit sind und ihre Menge oder ihren Umfang zu berücksichtigen, und dann in Abhängigkeit von den Ergebnissen der vorhergehenden Operation die Modalitäten der Übertragung festzulegen oder später einen neuen Dialog aufzubauen.

3. Verfahren nach einem der Ansprüche 1 und 2, dadurch gekennzeichnet, daß die Festlegung der Modalitäten der Übertragung im wesentlichen darin besteht, dem betreffenden lokalen Sicherungsmodul (1) eine Rufnummer für die sofortige oder auf einen von der zentralen Speichereinheit (6) festgelegten Zeitpunkt verschobene Übertragung der betreffenden Daten und/oder Dateien in Abhängigkeit von deren Umfang oder Menge mitzuteilen.

4. Verfahren nach einem der Ansprüche 1 bis 3, dadurch gekennzeichnet, daß es darin besteht, einerseits zur Sicherung lediglich die seit der vorhergehenden Sicherung manipulierten Daten oder Dateien zu übertragen, und zwar vorzugsweise nachts im Anschluß an Werktage und nach einer ersten Sicherung sämtlicher Daten und/oder Dateien des betreffenden Benutzers, und andererseits zur Archivierung sämtliche vom Benutzer ausgewählten Daten und/oder Dateien zu übertragen, und zwar vorteilhafterweise während arbeitsfreier Tage und indem eine Speicherung auf einem gegebenen, dem betreffenden Benutzer gehörenden physikalischen Träger durchgeführt wird.

5. Verfahren nach einem der Ansprüche 1 bis 4, dadurch gekennzeichnet, daß die Übertragung der Daten und/oder Dateien zu der oder den zentralen Speichereinheiten (6) darin besteht, eine Verbindung zwischen dem betreffenden lokalen Sicherungsmodul (1) und der oder den Einheiten (6) nach vorheriger Festlegung der Modalitäten der Übertragung herzustellen, dann die Daten und/oder Dateien von dem lokalen Sicherungsmodul (1) zu der oder den zentralen Speichereinheiten (6) zu übertragen und schließlich am Ende der Übertragung eine Quittungsmeldung oder ein Quittungssignal von letzterer oder letzteren an das lokale Sicherungsmodul (1) zu senden und diese Meldung oder dieses Signal zum betreffenden Computer (2) zu übertragen.

6. Verfahren nach Anspruch 5, dadurch gekennzeichnet, daß es darin besteht, vor dem Herstellen der Verbindung zwischen dem lokalen Sicherungsmodul (1) und der betreffenden zentralen Speichereinheit (6) die zu sichernden Daten und/oder Dateiinhalte am Modul (1) zu chiffrieren oder zu codieren, nach Durchführung der Übertragung zur zentralen Speichereinheit (6) die Unversehrtheit der übertragenen Daten und/oder Dateiinhalte zu überprüfen und gegebenenfalls eine Unversehrtheitsbestätigung auszusenden, die von der zentralen Speichereinheit (6) über das lokale Sicherungsmodul (1) zum betreffenden Computer (2) rückübertragen wird.

7. Verfahren nach einem der Ansprüche 1 bis 6, dadurch gekennzeichnet, daß beim ersten Einschalten des betreffenden Computers (2) durch den Benutzer nach einer Sicherungsoperation letzterer automatisch eventuelle Funktionsstörungen oder Anomalien anzeigt, die bei der vorgenannten Sicherung aufgetreten sind.

8. Verfahren nach einem der Ansprüche 1 bis 7, dadurch gekennzeichnet, daß es zur Wiederherstellung der zuvor gesicherten Daten und/oder Dateien darin besteht, eine entsprechende Anfrage in einer spezifischen Datei abzulegen, deren Inhalt ständig von dem lokalen Sicherungsmodul (1) überprüft wird, diese Anfrage zu der betreffenden zentralen Speichereinheit (6) zu übertragen und eine Verbindung mit der Einheit (6) mit Hilfe des lokalen Sicherungsmoduls (1) herzustellen, letzteres zu identifizieren und die rückzuübertragenden gesicherten Daten und/oder Dateien an der zentralen Speichereinheit (6) vorzubereiten und schließlich eine automatische Rückübertragungsprozedur der vorgenannten Daten und/oder Dateien von der zentralen Speichereinheit (6) zu dem lokalen Sicherungsmodul (1) in Gang zu setzen, das die Anfrage ausgegeben hat, wobei die Daten und/oder Dateien dann nach Gutdünken vom Benutzer rückkopiert werden können.

9. Verfahren nach einem der Ansprüche 1 bis 8, dadurch gekennzeichnet, daß die Übertragung durch ein spezialisiertes oder nicht spezialisiertes digitales Wählnetz (5) hoher Übertragungskapazität, insbesondere eines nach der europäischen EURO-ISDN-Norm, sichergestellt wird.

10. Verfahren nach einem der Ansprüche 1 bis 9, dadurch gekennzeichnet, daß es darin besteht, unmittelbar nach Einschalten des Computers (2) und vor jeglicher Manipulation von Daten und/oder Dateien automatisch eine Viruserkennungsprozedur auszuführen und im Falle einer wirksamen Erkennung das Sicherungsverfahren zu unterbrechen.

11. Vorrichtung zur Durchführung des Sicherungs- und/oder Archivierungsverfahrens nach einem der Ansprüche 1 bis 10, dadurch gekennzeichnet, daß sie im wesentlichen besteht aus einerseits einem lokalen Sicherungsmodul (1) mit einer Verarbeitungseinheit (7), die mit einer Zeitschaltung (3), einer lokalen Speichereinheit (7') und einer Schnittstelleneinheit (8) ausgestattet ist, und andererseits einer Schalteinrichtung (9), die durch die Verarbeitungseinheit (7) gesteuert wird und parallel zum Netzschalter (10) des betreffenden einzigen Computers (2) oder des für die Sicherung vorgesehenen vorgegebenen Computers (2) eines Computernetzes angeordnet ist, aus einer Netzverbindungseinheit (8') des Moduls (1) mit dem Computer (2) und schließlich aus wenigstens einer zentralen Speichereinheit (6), die mit mehreren lokalen Sicherungsmodulen (1) über ein öffentliches Fernmeldenetz (5) verbunden sein kann.

12. Vorrichtung nach Anspruch 11, dadurch gekennzeichnet, daß das lokale Sicherungsmodul (1) aus mehreren Elektronikkarten besteht, die an eine stabilisierte Stromversorgung angeschlossen sind und jede eine oder mehrere der vorgenannten Einheiten (7 bis 9) enthalten und daß es in einem Gehäuse angeordnet ist, das von dem Gehäuse des betreffenden einzigen Computers (2) oder des für die Sicherung vorgesehenen Computers (2) getrennt oder in diesem enthalten ist, wobei eine gehäuseexterne elektronische Schlüsselvorrichtung zur Identifizierung und Benutzungsermächtigung zum Modul (1) hinzugefügt sein kann.

13. Vorrichtung nach einem der Ansprüche 11 und 12, dadurch gekennzeichnet, daß das lokale Sicherungsmodul (1) ferner eine Kommunikationseinheit oder -karte (11) zum Anschließen an und als Schnittstelle mit dem Fernmeldewählnetz (5) sowie gegebenenfalls eine Chipkartenlesevorrichtung zur Identifizierung des Benutzers und zur Chiffrierung der Daten und/oder Dateien vor der Übertragung umfaßt.

14. Vorrichtung nach einem der Ansprüche 11 bis 13, dadurch gekennzeichnet, daß die zumindest vorhandene, an einem vom lokalen Sicherungsmodul (1) geografisch entfernten Ort installierte zentrale Speichereinheit (6) im wesentlichen besteht aus einerseits wenigstens einer Verarbeitungseinheit (12), die mit wenigstens einer Schnittstelleneinheit (13) zur Kommunikation mit dem Fernmeldewählnetz (5) und wenigstens einer schnellen Speichereinheit (14) versehen ist, und andererseits wenigstens einer Speichereinheit (15) zum Speichern auf Trägern mit sehr großer Speicherkapazität, wobei sämtliche Einheiten (12 bis 15) an eine abgesicherte Stromversorgung (16) angeschlossen sind.

15. Vorrichtung nach Anspruch 14, dadurch gekennzeichnet, daß die Träger mit sehr großer Speicherkapazität aus magnetooptischen Platten bestehen und daß die Speichereinheit (15) aus zwei Schreib-/Lesemodulen (17) für magnetooptische oder optische, einmal beschreibbare und nicht löschbare Platten oder einem Schreib-/Lesemodul (17) der vorgenannten Art in Verbindung mit einem Trägermagazin (18) für magnetooptische oder optische, einmal beschreibbare und nicht löschbare Platten besteht.

16. Vorrichtung nach einem der Ansprüche 14 und 15, dadurch gekennzeichnet, daß sämtliche Einheiten (12 bis 15) und das Modul (17) verdoppelt sind, wobei Netzverbindungseinheiten oder -karten eventuell die Zuordnung mehrerer zentraler Speichereinheiten (6) zu einem Netz ermöglichen können.

## Claims

1. Method of backing up and/or archive storing computer data and/or files of a computer or a network of computers, characterized in that it is automatic and in that it consists in powering up, if necessary, at a predetermined time, the single computer (2) concerned or a determined computer (2), designed for backing up, of a network of computers belonging to a user, by means of an initialized clock circuit (3) in a local backup module (1), determining and compacting, if necessary, the computer data and/or files modified or manipulated by the users since the last backup, after having compared said data and/or said files with a reference list of data and/or files to be backed up or not to be backed up, then transferring to the local backup module (1) the data and/or the files selected or concerned by the back up, storing the latter at said backup module (1), setting up a dialogue, if necessary with more than one attempt, between the latter and at least one central storage unit (6), via a public or private telecommunication network (5), and defining the conditions of transfer, thereafter transferring said data and/or files from said module (1) to said unit (6), and, finally, after completion of the preceding operation, powering down the computer (2) in question, if necessary.

2. Method according to claim 1, characterized in that the setting up and the execution of the dialogue between a local backup module (1) and a central storage unit (6) consist in, for the latter, calling successively all of the modules (1) connected to said unit (6), verifying at each module (1) if the data and/or the files are ready for transfer and taking account of their quantity or volume, and then, according to the results of the preceding operation, defining the conditions of transfer or setting up a new dialog subsequently.

3. Method according to any one of claims 1 and 2, characterized in that the definition of the conditions of transfer essentially consists in communicating to the local backup module (1) in question a call number for the transfer of the data and/or files in question, either immediately or deferred to a time set by the central storage unit (6), according to the volume or the quantity of the latter.

4. Method according to any one of claims 1 to 3, characterized in that it consists, on the one hand, in transferring for backing up only data or files manipulated since the preceding backup, preferably during the night periods after business days and after a first backing up of the set of the data and/or files of the user concerned, and, on the other hand, in transferring for archive storage the set of the data or files selected by the user, advantageously during non-business days and using a storage on a given physical medium specific to the user concerned.

5. Method according to any one of claims 1 to 4, characterized in that the transfer of the data and/or files to the central storage unit or units (6) consists in setting up a link between the local backup module (1) in question and said unit(s) (6), after first defining the conditions of transfer, then transmitting said files and/or data from said local backup module (1) to said central storage unit or units (6), and finally, at the end of transmission, sending an acknowledgement message or signal from the latter to said local backup module (1) and transmitting said message or signal to the computer (2) concerned.

6. Method according to claim 5, characterized in that it consists in, before setting up the link between the local backup module (1) and the central storage unit (6) in question, encrypting or encoding the data and/or the contents of the files to be backed up at said module (1), verifying, after completing transmission to the central storage unit (6), the integrity of the data and/or the contents of the files transmitted and, if necessary, sending an integrity certificate that is returned by the central storage unit (6) to the computer (2) concerned via the local backup module (1).

7. Method according to any one of claims 1 to 6, characterized in that on the first powering up of the concerned computer (2) by the user after a backup the computer automatically displays any malfunctions or defaults that occurred during the aforementioned backup.

8. Method according to any one of claims 1 to 7, characterized in that it consists in, for recovering data and/or files backed up previously, placing a corresponding request in a specific file, the content of which is monitored continuously by the local backup module (1), transmitting said request to the central storage unit (6) concerned and setting up a link with said unit (6), by means of said local backup module (1), identifying the latter and preparing the backed up data and/or files to be transmitted, at said central storage unit (6) and, finally, starting an automatic transfer procedure for returning the aforementioned data and/or files from the central storage unit (6) to said local backup module (1) that sent the request, after which the data and/or files can be copied at will by the user.

9. Method according to any one of claims 1 to 8, characterized in that the transmission is effected via a dedicated or non-dedicated digital high-bit-rate switched network (5), for example a network conforming to the European EURO ISDN standard.

10. Method according to any one of claims 1 to 9, characterized in that it consists in, immediately after powering up the computer (2) and before any manipulation of data and/or files, automatically executing a virus detection procedure and interrupting said backup method if a virus is detected.

11. Device for implementing the backing up and/or archive storage according to any one of claims 1 to 10, characterized in that it primarily comprises, on the one hand, a local backup module (1) comprising a processing unit (7) having a clock circuit (3), a local storage unit (7') and an interface unit (8), on the other hand, a switching means (9), controlled by said processing unit (7) and connected in parallel with the power supply switch (10) of the single computer (2) concerned or of the determined computer (2), designed for backing up, in a network of computers, and a unit (8') for connecting the module (1) to the computer (2) in a network, and, finally, at least one central storage unit (6) that can be connected to a plurality of local backup modules (1) via a public telecommunication network (5).

12. Device according to claim 11, characterized in that the local backup module (1) comprises a plurality of electronic circuit cards connected to a stabilized power supply and each incorporating one or more of the aforementioned units (7 through 9) and is disposed in a separate casing or is incorporated in the casing of the single computer (2) concerned or the particular computer (2) designed for backing up, a user authorization and identification electronic key device external to the casing optionally being added to said module (1).

13. Device according to claims 11 and 12, characterized in that the local backup module (1) further comprises a communication unit or card (11) for the connection to and the interface with the switched telecommunication network (5) and, if necessary, a smart card reading unit for identifying the user and encrypting the data and/or files before transmission.

14. Device according to any one of claims 11 to 13 characterized in that the at least one central storage unit (6), installed at a location geographically remote from the local backup module (1), essentially comprises, on the one hand, at least one processing unit (12) having at least one interface unit (13) for communication with the switched telecommunication network (5) and at least one high-speed storage unit (14) and, on the other hand, at least one very high capacity medium storage unit (15), all of said units (12 through 15) being connected to a protected electrical power supply (16).

15. Device according to claim 14, characterized in that the very high capacity media are magneto-optical disks and in that the storage unit (15) consists in either two storage/reading modules (17) with magneto-optical or optical disks for single use and that cannot be erased or a drive (17) of storage/reading of the aforementioned type, associated with a medium storage magazine (18) holding magneto-optical or optical disks, of the single-use type and that cannot be erased.

16. Device according to any one of claims 14 and 15, characterized in that all of the units (12 through 15) and the module (17) are duplicated, network connection units or cards optionally linking a plurality of central storage units (6) in a network.
